# EUROPÄISCHE PATENTSCHRIFT

(11) **EP 3 674 610 B1**
(45) Veröffentlichungstag und Bekanntmachung des Hinweises auf die Patenterteilung: **27.11.2024**
(21) Anmeldenummer: 19290125.4
(22) Anmeldetag: 19.12.2019
(51) Int. Cl.: F24D 3/18, F24D 3/08, F24D 11/02, F24D 17/02, F25B 30/02

(54) **ANORDNUNG ZUR WÄRMEERZEUGUNG**
ASSEMBLY FOR HEAT GENERATION
DISPOSITIF DE PRODUCTION DE LA CHALEUR

(30) Priorität: 20.12.2018 DE 102018222555
(43) Veröffentlichungstag der Anmeldung: 01.07.2020
(73) Patentinhaber: Yack S.A.S., 83270 St. Cyr sur Mer (FR)
(72) Erfinder: Gertis, Basil, 83740 La Cadiere d'Azur (FR)
(74) Vertreter: Paustian, Othmar

(56) Entgegenhaltungen:
- EP-A1- 2 096 378
- EP-A1- 2 581 682
- CN-A- 105 509 125
- JP-A- 2006 308 278

## Beschreibung

Die Erfindung bezieht sich auf eine Anordnung zur Wärmeerzeugung mit einer CO₂-Wärmepumpe. Eine Anordnung zur Wärmeerzeugung mit einer CO₂-Wärmepumpe ist aus JP 2006 308278 bekannt.

CO₂-Wärmepumpen zeichnen sich durch eine hohe Umweltverträglichkeit des verwendeten Kältemittels CO₂ (auch als R744 bezeichnet) sowie durch eine hohe Effizienz aus. CO₂ ist ein zu 100% natürliches Gas, nicht giftig, nicht explosiv, nicht brennbar, bei Umgebungstemperaturen bis hinunter zu -25°C einsetzbar, nicht von der chemischen Industrie künstlich erschaffen, hat ein Treibhauspotential (Global Warming Potential) von GWP = 1, ein Ozonabbaupotential (Ozone Depletion Potential) von ODP = 0 und ist in großen Mengen verfügbar ohne das Risiko einer Verknappung. Zudem benötigen COz-Wärmepumpen keinen Antrieb für den Kältemittelkreislauf, sodass im Betrieb ihr Bedarf an elektrischer Energie reduziert ist. Allerdings benötigen sie für einen effizienten Betrieb eine große Temperaturdifferenz (Temperaturspreizung) zwischen Austritts-und Eintrittstemperatur (hohes ΔT), sodass sie im Wohnsektor, einschließlich z. B. Hotels, Studentenwohnheime, Seniorenheime, Kantinen, Mehrfamilienhäusern, fast ausschließlich für die Warmwasserbereitung, d. h. für die Brauchwasserbereitung, und im Übrigen in der Industrie eingesetzt werden. Bei der Beheizung von Räumen oder Gebäuden ist das ΔT zu klein und damit der Betrieb einer COz-Wärmepumpe unwirtschaftlich.

Aufgabe der vorliegenden Erfindung ist es, den Einsatz einer CO₂-Wärmepumpe auch bei Wärmeverbrauchern zu ermöglichen, bei denen das ΔT klein ist.

Erfindungsgemäß wird diese Aufgabe mit einer Anordnung gemäß Anspruch 1 gelöst.

Der Ausdruck "in Strömungsverbindung stehen" soll beschreiben, dass ein Fluidstrom direkt vom Fluidaustritt einer der Komponenten der Anordnung in den Fluideintritt einer anderen Komponente strömt, oder dass der Fluidstrom vom Fluidaustritt einer Komponente indirekt über eine oder mehrere zwischengeschaltete Komponenten oder zusammen mit einem weiteren Fluidstrom zum Fluideintritt einer anderen Komponente strömt.

Der Erfindung liegt die Erkenntnis zugrunde, dass der Einsatz einer COz-Wärmepumpe häufig daran scheitert, dass die Rücklauftemperatur in einem Fluidkreislauf mit kleinem ΔT - wie z. B. bei einer Heizungsanlage für Räume oder Gebäude - zu hoch ist, um als Eintrittstemperatur in die CO₂-Wärmepumpe noch geeignet zu sein.

Durch die erfindungsgemäßen Maßnahmen wird ein wirtschaftlicher Betrieb einer CO₂-Wärmepumpe auch bei einem Wärmeverbraucher bzw. Wärmetauscher erreicht, der nur eine kleine Temperaturspreizung aufweist. Dadurch, dass erfindungsgemäß in einem Fluidkreislauf zwischen dem Fluidaustritt des (mindestens einen) Wärmetauschers und dem Fluideintritt einer CO₂-Wärmepumpe eine Fluid/Fluid-Wärmepumpe geschaltet ist, kann zum einen dem aus dem Wärmetauscher austretenden Fluidstrom soviel Wärme entzogen werden, dass ein erster aus der Fluid/Fluid-Wärmepumpe austretender Fluidstrom eine Temperatur aufweist, die gleich oder kleiner als die maximale Eintrittstemperatur der CO₂-Wärmepumpe ist. Zum anderen kann mit der dem ersten Fluidstrom entzogenen Wärme der zweite die Fluid/Fluid-Wärmepumpe durchströmender Fluidstrom soweit aufgeheizt werden, dass auch dessen Wärme effizient nutzbar ist.

Der Erfindung liegt also der Gedanke zugrunde, mit Hilfe einer Fluid/Fluid-Wärmepumpe dem aus dem Wärmetauscher austretenden Fluidstrom, der eine Temperatur aufweist, die einerseits zu hoch ist, um den Fluidstrom in die CO₂-Wärmepumpe einzuleiten, aber andererseits auch zu niedrig ist, um seine Wärme noch effektiv nutzen zu können, Wärme zu entziehen und zwei Fluidströme bereitzustellen, die beide wieder nutzbringend eingesetzt werden können und deren erster ein Kaltfluidstrom ist, dessen Temperatur niedriger ist als die des eintretenden Fluidstroms und der für den Eintritt in die CO₂-Wärmepumpe geeignet ist, und deren zweiter ein Warmfluidstrom ist, dessen Temperatur höher ist als die des eintretenden Fluidstroms und dessen Wärme wieder nutzbringend verwendbar ist.

In einer bevorzugten Ausführungsform der Erfindung gabelt sich der Kreislauf-Fluidstrom zwischen Wärmetauscher und Fluid/Fluid-Wärmepumpe und tritt ein erster Teilstrom als erster Fluidstrom in den ersten Fluideintritt und ein zweiter Teilstrom als zweiter Fluidstrom in den zweiten Fluideintritt ein und mündet der zweite Fluidstrom nach dem Austritt aus dem Warmfluidaustritt in den Fluidstrom von der COz-Wärmepumpe zum Wärmetauscher. Durch die Aufteilung in zwei Teilströme wird der vom Wärmetauscher kommende Fluidstrom hinsichtlich seiner Wärme bzw. Temperatur sozusagen "entmischt" in einen Kaltfluidstrom und in einen Warmfluidstrom. Der zweite Fluidstrom - d. h. der Warmfluidstrom - weist hierbei eine so hohe Temperatur auf, dass er dem Kreislauf-Fluidstrom auf der Eintrittsseite des Wärmetauschers wieder zugeleitet wird. Bei dieser Ausführungsform ist es auch denkbar, dass sich der Kreislauf-Fluidstrom erst innerhalb der Fluid/Fluid-Wärmepumpe in den ersten und zweiten Teilstrom gabelt.

In einer anderen Ausführungsform wird der aus dem Wärmetauscher austretende Fluidstrom nicht aufgeteilt, sondern vollständig als erster Fluidstrom in der Fluid/Fluid-Wärmepumpe dem Kaltfluidaustritt zugeleitet. Der zweite Fluideintritt und der Warmfluidaustritt der Fluid/Fluid-Wärmepumpe - d. h. der zweite Fluidstrom - sind dabei Teil eines zweiten Fluidkreislaufes, der einen weiteren Wärmetauscher aufweist.

Gemäß der Erfindung weist die Anordnung ferner einen Fluidspeicher auf, der einen ersten Bereich zur Speicherung von kaltem Fluid, einen zweiten Bereich zur Speicherung von warmem Fluid und einen dritten Bereich zur Speicherung von Fluid aufweist, dessen Temperatur zwischen der des kalten Fluids und der des warmen Fluids liegt, wobei jeder der drei Bereiche mindestens einen Fluideintritt und mindestens einen Fluidaustritt aufweist und ein Fluideintritt des ersten Bereichs mit dem Kaltfluidaustritt der Fluid/Fluid-Wärmepumpe und ein Fluidaustritt des ersten Bereichs mit dem Fluideintritt der CO₂-Wärmepumpe in Strömungsverbindung steht, ein Fluideintritt des zweiten Bereichs mit dem Fluidaustritt der CO₂-Wärmepumpe und ein Fluidaustritt des zweiten Bereichs mit dem Fluideintritt des Wärmetauschers in Strömungsverbindung steht und ein Fluideintritt des dritten Bereichs mit dem Fluidaustritt des Wärmetauschers und ein Fluidaustritt des dritten Bereichs mit dem ersten Fluideintritt der Fluid/Fluid-Wärmepumpe in Strömungsverbindung steht.

Unter dem Begriff "Fluidspeicher" werden hierbei auch voneinander getrennte, einzelne Speicher verstanden, die jeweils einen der Bereiche ausbilden, also beispielsweise drei nebeneinanderstehende Behälter oder Tanks. Der Fluidspeicher kann jedoch auch ein einziges Behältnis sein, dessen Innenraum in drei Bereiche unterteilt ist, beispielsweise ein Tank mit drei Kammern.

Wenn sämtliche Fluideintritte und Fluidaustritte der CO₂-Wärmepumpe, des Wärmetauschers und der Fluid/Fluid-Wärmepumpe mit dem Fluidspeicher in Strömungsverbindung stehen, bildet der Fluidspeicher einen Fluidpuffer zwischen diesen einzelnen Komponenten, sodass die Strömungsmengen zwischen diesen Komponenten nicht mehr aufeinander abgestimmt werden müssen. Es ist jedoch auch daran gedacht, dass zusätzlich zu den Fluidströmen von den Komponenten zum Fluidspeicher und vom Fluidspeicher zu den Komponenten auch noch Fluidströme direkt zwischen den Komponenten strömen können. Beispielsweise kann vom Fluidstrom zwischen dem Fluidaustritt des Wärmetauschers und dem Fluideintritt des Fluidspeichers ein Fluidstrom zum ersten Fluideintritt der Fluid/Fluid-Wärmepumpe abzweigen.

Bevorzugt weist der zweite Bereich des Fluidspeichers einen zweiten Fluideintritt auf und steht dieser mit dem Warmfluidaustritt der Fluid/Fluid-Wärmepumpe in Strömungsverbindung oder mündet der zweite Fluidstrom nach dem Austritt aus dem Warmfluidaustritt der Fluid/Fluid-Wärmepumpe in den Fluidstrom von der CO₂-Wärmepumpe zum Fluidspeicher. Damit laufen sämtliche Fluidströme über den Fluidspeicher, sodass für sämtliche Fluideintritte und Fluidaustritte ein Fluidpuffer zur Verfügung steht.

In einer vorteilhaften Ausführungsform der Erfindung weist die Anordnung einen zweiten Wärmetauscher mit einem Fluideintritt und einem Fluidaustritt auf, wobei der zweite Bereich des Fluidspeichers einen zweiten Fluidaustritt aufweist, der mit dem Fluideintritt des zweiten Wärmetauschers in Strömungsverbindung steht, und der erste und/oder der dritte Bereich des Fluidspeichers einen zweiten Fluideintritt aufweist, der mit dem Fluidaustritt des zweiten Wärmetauschers in Strömungsverbindung steht. Ein solcher zweiter Wärmetauscher könnte eine größere Temperaturspreizung, d. h. ein größeres ΔT, zwischen seiner Fluideintrittstemperatur und seiner Fluidaustrittstemperatur als der erste Wärmetauscher aufweisen.

Solch ein zweiter Wärmetauscher mit großem ΔT kann auch ohne Fluidspeicher in eine erfindungsgemäße Anordnung eingebunden werden. So kann beispielsweise der Fluidaustritt der COz-Wärmepumpe sowohl mit dem Fluideintritt des ersten Wärmetauschers als auch mit dem Fluideintritt des zweiten Wärmetauschers in Strömungsverbindung stehen und der Fluidaustritt des zweiten Wärmetauschers in den Kaltfluidstrom vom Kaltfluidaustritt der Fluid/Fluid-Wärmepumpe zur COz-Wärmepumpe oder in den Fluidstrom vom ersten Wärmetauscher zur Fluid/Fluidwärmepumpe münden.

Die vorstehend beschriebenen Ausführungsformen zeigen, dass auch ein Wärmetauscher mit großem ΔT ohne weiteres in eine erfindungsgemäße Anordnung integrierbar ist.

In einer bevorzugten Weiterbildung der Erfindung ist der Fluidspeicher ein Schichtspeicher mit hoher Stratifikation, der mindestens drei Schichten aufweist, wobei die unterste Schicht dem ersten Bereich und die oberste Schicht dem zweiten Bereich und die mittlere Schicht dem dritten Bereich entspricht. Die Fertigung des Fluidspeichers wird hierdurch vereinfacht. Zudem verbraucht ein Schichtspeicher gegenüber einzelnen, voneinander getrennten Fluidspeichern für die drei Bereiche weniger Platz.

Vorteilhafterweise ist das im Fluidkreislauf umlaufende Fluid Wasser. Hierdurch ist eine kostengünstige Ausgestaltung der Anordnung möglich.

In vorteilhafter Weiterbildung der Erfindung ist der erste Wärmetauscher Teil einer Raum- oder Gebäudeheizung. Besonders bevorzugt ist dabei der zweite Wärmetauscher Teil eines Brauchwasserkreislaufes. Bei Raum- oder Gebäudeheizungen liegen zwischen den Vorlauf- und den zugehörigen Rücklauftemperaturen, d. h. zwischen den Eintritts- und den zugehörigen Austrittstemperaturen des ersten Wärmetauschers, kleine Temperaturdifferenzen ΔT mit hohen Rücklauftemperaturen vor. Beispielsweise können die Temperaturdifferenzen ΔT bei Raum- oder Gebäudeheizungen im Bereich von 2° C bis 30° C, bevorzugt im Bereich von 5° C bis 20° C, liegen bei Rücklauftemperaturen von 25° C und höher, bevorzugt 30° C und höher. Ein Brauchwasserkreislauf hat ein großes ΔT, da Brauchwasser Warmwasser und Kaltwasser einschließt und daher die Rücklauftemperatur deutlich niedriger ist als bei einem Heizungskreislauf. Mit einer erfindungsgemäßen Anordnung kann eine Raum- oder Gebäudeheizung und gleichzeitig ein Brauchwasserkreislauf äußert effizient und dabei sehr umweltverträglich betrieben werden.

Vorzugsweise beträgt die Temperaturdifferenz zwischen dem in die CO₂-Wärmepumpe eintretenden Fluid und dem aus ihr austretenden Fluid mindestens 20° C und liegt die Temperaturdifferenz besonders bevorzugt im Bereich von 40° C bis 85° C und ganz besonders bevorzugt im Bereich von 45° C bis 70° C. In diesen Bereichen ist ein wirtschaftlicher bis optimaler Betrieb einer COz-Wärmepumpe gewährleistet.

Vorteilhafterweise beträgt dabei die Temperatur des in die CO₂-Wärmepumpe eintretenden Fluids höchstens 30° C und liegt sie besonders bevorzugt im Bereich von 2° C bis 25° C und ganz besonders bevorzugt im Bereich von 5° C bis 20° C. Hiermit kann eine erfindungsgemäße Anordnung in einem äußerst weiten Bereich der Gebäudetechnik eingesetzt werden.

Dabei beträgt wiederum vorzugsweise die Temperatur des aus der COz-Wärmepumpe austretenden Fluids mindestens 50° C und liegt sie besonders bevorzugt im Bereich von 55° C bis 95° C und ganz besonders bevorzugt im Bereich von 60° C bis 90° C.

In günstiger Weiterbildung der Erfindung ist die Fluid/Fluid-Wärmepumpe eine Luft/Wasser-Wärmepumpe, wobei der zweite Fluidstrom ein Luftstrom ist. Dabei steht besonders bevorzugt der zweite Fluideintritt der Luft/Wasser-Wärmepumpe mit der Umgebungsluft des Raumes bzw. des Gebäudes in Strömungsverbindung und mündet der Warmfluidaustritt der Luft/Wasser-Wärmepumpe in den Raum bzw. das Gebäude. Mit dem Einsatz einer Luft/Wasser-Wärmepumpe können die Kosten für eine erfindungsgemäße Anordnung weiter reduziert werden.

In einer vorteilhaften Weiterbildung der Erfindung sind der Kaltfluidaustritt der Fluid/Fluid-Wärmepumpe an den Vorlauf eines Kühlkreislaufes und der erste Fluideintritt der Fluid/Fluid-Wärmepumpe an den Rücklauf eines Kühlkreislaufes anschließbar und ist der Fluideintritt der COz-Wärmepumpe an den Fluidaustritt des ersten Bereichs des Fluidspeichers anschließbar und weist der erste Bereich des Fluidspeichers einen zweiten Fluideintritt auf, der mit dem Fluidaustritt eines zweiten Wärmetauschers, der ein großes ΔT aufweist, in Strömungsverbindung steht. Mit diesen Maßnahmen ist mit einer erfindungsgemäßen Anordnung im Sommer ein Betrieb fahrbar, bei dem die Temperatur des Rücklaufes des zweiten Wärmetauschers gering genug ist, um direkt oder über den ersten Bereich des Fluidspeichers dem Fluideintritt der COz-Wärmepumpe zugeleitet zu werden. Der erste Fluidstrom der Fluid/Fluid-Wärmepumpe kann dann Teil eines Kühlkreislaufes sein, wohingegen der zweite Fluidstrom der Fluid/Fluid-Wärmepumpe die vom ersten Fluidstrom abgezogene Wärme über den Fluidkreislauf dem mindestens einen zweiten Wärmetauscher zuführt, mit dem beispielsweise ein Brauchwasserkreislauf erwärmt werden kann.

Die Erfindung wird nachfolgend anhand der Zeichnungen beispielshalber noch näher erläutert.

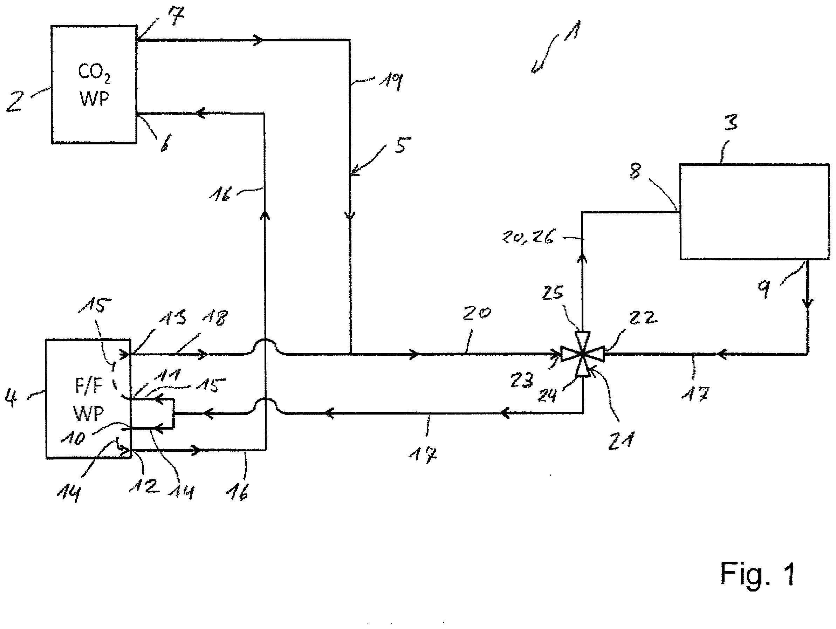

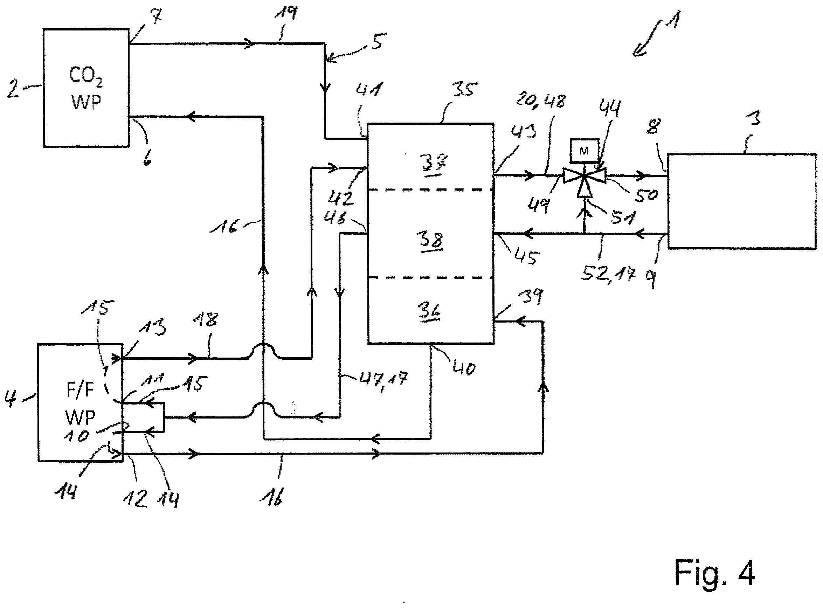

Die Figuren 1 bis 9 zeigen Beispiele einer Anordnung, wobei nur Figuren 4,5,6,8,9 eine erfindungsgemäße Anordnung mit Wärmespeicher zeigen.

Die dargestellten Ausführungsbeispiele einer erfindungsgemäßen Anordnung 1 weisen eine COz-Wärmepumpe 2, einen Wärmetauscher 3 und eine Fluid/Fluid-Wärmepumpe 4 auf, die in dieser Reihenfolge in einem Fluidkreislauf 5 hintereinander schaltbar sind, der von einem Fluid durchströmt wird.

Das Fluid kann ein flüssiges oder gasförmiges Medium sein und wirkt als Wärmeträger.

Die CO₂-Wärmepumpe 2 weist einen Fluideintritt 6 und einen Fluidaustritt 7 auf, wobei für die COz-Wärmepumpe 2 eine maximale Fluideintrittstemperatur vorgegeben ist.

Der Wärmetauscher 3 weist ebenfalls einen Fluideintritt 8 und einen Fluidaustritt 9 auf, wobei seine Fluidaustrittstemperatur höher ist als die maximale Fluideintrittstemperatur, die für die CO₂-Wärmepumpe 2 vorgegeben ist.

Die Fluid/Fluid-Wärmepumpe 4 weist einen ersten 10 und einen zweiten Fluideintritt 11 sowie einen Kaltfluidaustritt 12 und einen Warmfluidaustritt 13 auf. Der erste Fluideintritt 10 steht mit dem Kaltfluidaustritt 12 und der zweite Fluideintritt 11 mit dem Warmfluidaustritt 13 in Strömungsverbindung. Daher wird ein erster, durch den ersten Fluideintritt 10 eintretender Fluidstrom 14 zum Kaltfluidaustritt 12 geleitet, während ein zweiter, durch den zweiten Fluideintritt 11 eintretender Fluidstrom 15 zum Warmfluidaustritt 13 geleitet wird, wobei die Fluid/Fluid-Wärmepumpe 4 dazu eingerichtet ist, dem ersten Fluidstrom 14 Wärme zu entziehen und zum zweiten Fluidstrom 15 weiterzuleiten.

Die Fluid/Fluid-Wärmepumpe 4 ist weiterhin dazu eingerichtet, dass sie dem ersten Fluidstrom 14 dabei soviel Wärme entzieht, dass die Temperatur des aus dem Kaltfluidaustritt 12 austretenden Fluidstroms 16 höchstens gleich der Fluideintrittstemperatur ist, die für die COz-Wärmepumpe 2 als maximale Fluideintrittstemperatur vorgegeben ist.

Der Fluidaustritt 9 des Wärmetauschers 3 steht mit dem ersten Fluideintritt 10 der Fluid/Fluid-Wärmepumpe 4 in Strömungsverbindung.

Der Kaltfluidaustritt 12 der Fluid/Fluid-Wärmepumpe 4 steht mit dem Fluideintritt 6 der COz-Wärmepumpe 2 in Strömungsverbindung.

In den Figuren sind die Fluidströme als Verbindungslinien zwischen den Komponenten dargestellt, wobei die Pfeile die Strömungsrichtung des jeweiligen Fluidstroms angeben.

Die bauliche Ausbildung der Verbindungen erfolgt mittels Rohrleitungen.

Bei dem in Figur 1 dargestellten Anordnung 1 teilt sich der vom Fluidaustritt 9 des Wärmetauschers 3 kommende Fluidstrom 17 vor Erreichen der Fluid/Fluid-Wärmepumpe 4 in zwei Teilströme, von denen ein erster Teilstrom als erster Fluidstrom 14 in den ersten Fluideintritt 10 strömt und der zweite Teilstrom als zweiter Fluidstrom 15 in den zweiten Fluideintritt 11 strömt.

Dem ersten Teilstrom, d. h. dem ersten Fluidstrom 14, wird in der Fluid/Fluid-Wärmepumpe 4 Wärme entzogen. Er tritt als Kaltfluidstrom 16 aus dem Kaltfluidaustritt 12 aus und in den Fluideintritt 6 der CO₂-Wärmepumpe 2 ein.

Dem zweiten Teilstrom, d. h. dem zweiten Fluidstrom 15, wird in der Fluid/Fluid-Wärmepumpe 4 die dem ersten Fluidstrom 14 entzogene Wärme zugeführt, sodass der zweite Teilstrom als Warmfluidstrom 18 aus dem Warmfluidaustritt 13 ausströmt. Dieser Warmfluidstrom 18 vereinigt sich mit dem aus dem Fluidaustritt 7 der CO₂-Wärmepumpe 2 austretenden Fluidstrom 19; der vereinigte Fluidstrom 20 tritt in den Fluideintritt 8 des Wärmetauschers 3 ein.

In der in Figur 1 dargestellten Anordnung ist in die beiden Fluidströme 17, 20 vom und zum Wärmetauscher 3 ein Vier-Wege-Ventil 21 geschaltet, dessen erster Eingang 22 an den Fluidaustritt 9 des Wärmetauschers 3 angeschlossen ist und dessen zweiter Eingang 23 an den Fluidaustritt 7 der COa-Wärmepumpe 2 sowie an den Warmfluidaustritt 13 der Fluid/Fluid-Wärmepumpe 4 angeschlossen ist und dessen erster Ausgang 24 an den ersten Fluideintritt 10 und im Figur 1 dargestellten Ausführungsbeispiel aufgrund der Gabelung auch an den zweiten Fluideintritt 11 der Fluid/Fluid-Wärmepumpe 4 angeschlossen ist und dessen zweiter Ausgang 25 an den Fluideintritt 8 des Wärmetauschers 3 angeschlossen ist. Das Vier-Wege-Ventil 21 ist mindestens in einem Betriebsmodus so schaltbar, dass der in den ersten Eingang 22 eintretende Fluidstrom 17 aus dem ersten Ausgang 24 wieder austritt und der in den zweiten Eingang 23 eintretende Fluidstrom 20 aus dem zweiten Ausgang 25 wieder austritt. In anderen Betriebsmodi kann das Vier-Wege-Ventil 21 so geschaltet werden, dass die eintretenden Fluidströme 17, 20 in jeweils vorgegebenen Verhältnissen miteinander gemischt werden. Beispielsweise kann die Temperatur des aus der CO₂-Wärmepumpe 2 austretenden Fluidstroms 19 mindestens 60° C betragen, wohingegen in einigen Fällen die Temperatur des in den Wärmetauscher 3 eintretenden Fluidstroms 26 im Bereich von 45° C bis 55° C liegen muss.

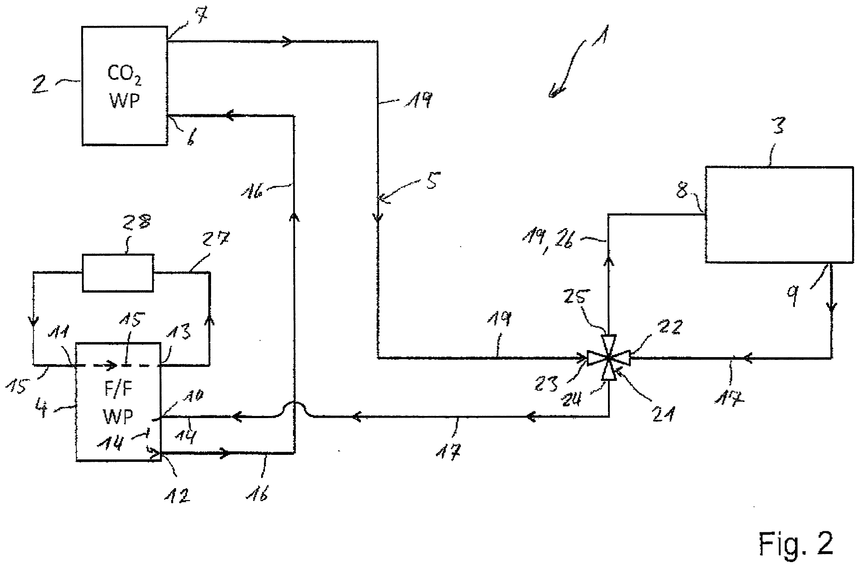

Die in Figur 2 dargestellte Anordnung entspricht der in Figur 1 dargestellten Anordnung bis auf die beiden Fluidströme 14, 15 in der Fluid/Fluid-Wärmepumpe 4. Bei der Anordnung gemäß Figur 2 tritt der gesamte vom Wärmetauscher 3 kommende Fluidstrom 17 in den ersten Fluideintritt 10 der Fluid/Fluid-Wärmepumpe 4 ein und bildet den ersten Fluidstrom 14, dem Wärme entzogen wird und der aus dem Kaltfluidaustritt 12 der Fluid/Fluid-Wärmepumpe 4 austritt und in den Fluideintritt 6 der CO₂-Wärmepumpe 2 eintritt.

Der zweite Fluidstrom 15 in der Fluid/Fluid-Wärmepumpe 4 ist Teil eines zweiten Fluidkreislaufes 27, zu dem ein weiterer Wärmeverbraucher 28, z. B. ein weiterer Wärmetauscher, gehört.

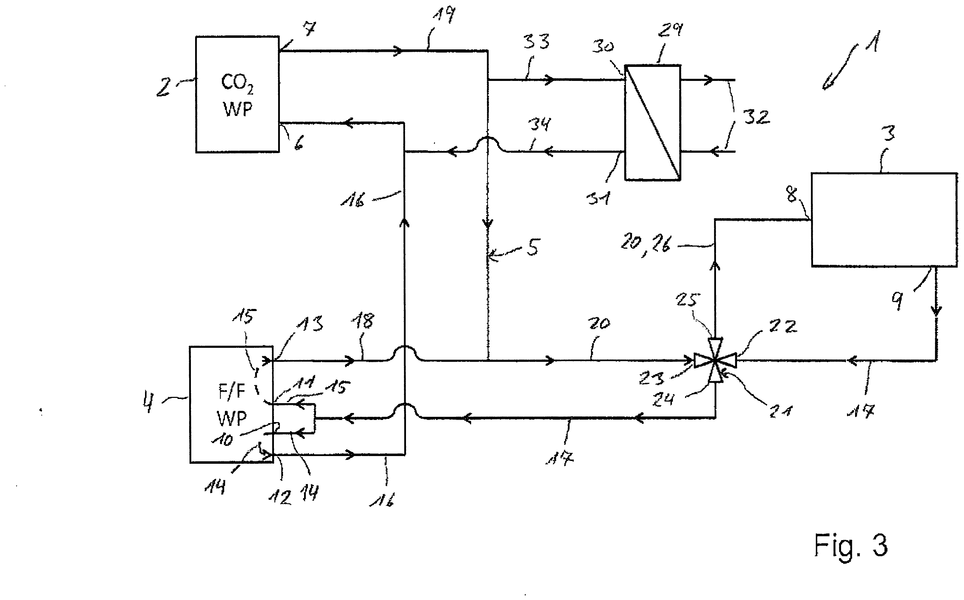

Die in Figur 3 dargestellte Anordnung entspricht der in Figur 1 dargestellten Anordnung, wobei ein zweiter Wärmetauscher 29 in den Fluidkreislauf 5 geschaltet ist. Der zweite Wärmetauscher 29 weist eine große Temperaturdifferenz ΔT zwischen Fluideintritt 30 und Fluidaustritt 31 auf, wie es beispielsweise bei einem Brauchwasserkreislauf 32 der Fall ist, zu dem der zweite Wärmetauscher 29 gehören könnte. Der (erste) Wärmetauscher 3 kann zum Beispiel Teil einer Raum- oder Gebäudeheizung sein.

Von dem Fluidstrom 19, der aus dem Fluidaustritt 7 der COz-Wärmepumpe 2 austritt, zweigt ein Teilstrom 33 ab, der zum Fluideintritt 30 des zweiten Wärmetauschers 29 strömt. Der aus dem Fluidaustritt 31 des zweiten Wärmetauschers 29 kommende Fluidstrom 34 mündet in den Kaltfluidstrom 16, der vom Kaltfluidaustritt 12 der Fluid/Fluid-Wärmepumpe 4 zum Fluideintritt 6 der COz-Wärmepumpe 2 strömt.

Das in Figur 4 dargestellte Ausführungsbeispiel der Erfindung basiert ebenfalls auf der Anordnung gemäß Figur 1, wobei hier ein Fluidspeicher 35 in die Fluidströme zwischen CO₂-Wärmepumpe 2, Wärmetauscher 3 und Fluid/Fluid-Wärmepumpe 4 geschaltet ist.

Der Fluidspeicher 35 weist mindestens drei Bereiche 36, 37, 38 auf: Einen ersten Bereich 36 zur Speicherung von kaltem Fluid, einen zweiten Bereich 37 zur Speicherung von warmem Fluid und einen dritten Bereich 38 zur Speicherung von Fluid, dessen Temperatur zwischen der des kalten Fluids und der des warmen Fluids liegt.

Der erste Bereich 36 weist einen Fluideintritt 39 auf, an den der Kaltfluidaustritt 12 der Fluid/Fluid-Wärmepumpe 4 angeschlossen ist, und weist einen Fluidaustritt 40 auf, der an den Fluideintritt 6 der COz-Wärmepumpe 2 angeschlossen ist. Der Kaltfluidaustritt 12 der Fluid/Fluid-Wärmepumpe 4 steht somit über den ersten Bereich 36 des Fluidspeichers 35 mit dem Fluideintritt 6 der CO₂-Wärmepumpe 2 in Strömungsverbindung.

Der zweite Bereich 37 weist zwei Fluideintritte 41, 42 und einen Fluidaustritt 43 auf. Der erste Fluideintritt 41 des zweiten Bereiches 37 ist an den Fluidaustritt 7 der CO₂-Wärmepumpe 2 angeschlossen. Der zweite Fluideinritt 42, der in einem vorgegebenen Abstand unterhalb des ersten Fluideintritts 41 angeordnet ist, ist an den Warmfluidaustritt 13 der Fluid/Fluid-Wärmepumpe 4 angeschlossen.

Der Fluidaustritt 43 des zweiten Bereiches 37 ist über ein Drei-Wege-Ventil 44 an den Fluideintritt 8 des Wärmetauschers 3 angeschlossen.

Somit stehen der Fluidaustritt 7 der CO₂-Wärmepumpe 2 und der Warmfluidaustritt 13 der Fluid/Fluid-Wärmepumpe 4 über den zweiten Bereich 37 des Fluidspeichers 35 mit dem Fluideintritt 8 des Wärmetauschers 3 in Strömungsverbindung.

Es ist auch daran gedacht, dass der zweite Bereich 37 des Fluidspeichers 35 nur einen Fluideintritt 41 aufweist und der Fluidstrom 18 aus dem Warmfluidaustritt 13 der Fluid/Fluid-Wärmepumpe 4 in den Fluidstrom 19 vom Fluidaustritt 7 der CO₂-Wärmepumpe 2 mündet.

Die Temperatur innerhalb jeden Bereichs des Fluidspeichers 35 ist nicht konstant, sondern fällt von oben nach unten, sodass beispielsweise oben im zweiten Bereich 37 des Fluidspeichers 35 das Fluid die heißeste Temperatur aufweist und der von der CO₂-Wärmepumpe 2 kommende Fluidstrom 19 vorzugsweise dort eingeleitet wird. Der von der Fluid/Fluid-Wärmepumpe 4 kommende Fluidstrom 18 weist üblicherweise eine niedrigere Temperatur als der von der COz-Wärmepumpe 2 kommende Fluidstrom 19 auf und wird daher vorzugsweise - wie in Figur 4 dargestellt - in einem vorgegebenen Abstand unterhalb der Eintrittsstelle 41 für den von der CO₂-Wärmepumpe 2 kommenden Fluidstrom 19 eingeleitet. Auf diese Weise wird erreicht, dass die im zweiten Bereich 37 (oben) vorhandene maximale Temperatur möglichst lange möglichst hoch bleibt.

Aus den gleichen Gründen ist unten im ersten Bereich 36 die Fluidtemperatur am niedrigsten, sodass dort der Fluidaustritt 40 aus dem ersten Bereich 36 angebracht ist.

Der dritte Bereich 38 weist einen Fluideintritt 45 und einen Fluidaustritt 46 auf. Der Fluideintritt 45 ist an den Fluidaustritt 9 des Wärmetauschers 3 angeschlossen. Der Fluidaustritt 46 des dritten Bereiches 38 ist an die beiden Fluideintritte 10, 11 der Fluid/Fluid-Wärmepumpe 4 angeschlossen, wobei sich der Fluidstrom 47 aus dem Fluidaustritt 46 des dritten Bereiches 38 vor den beiden Fluideintritten 10, 11 der Fluid/Fluid-Wärmepumpe 4 verzweigt, wie bereits in Verbindung mit dem Ausführungsbeispiel gemäß Figur 1 beschrieben.

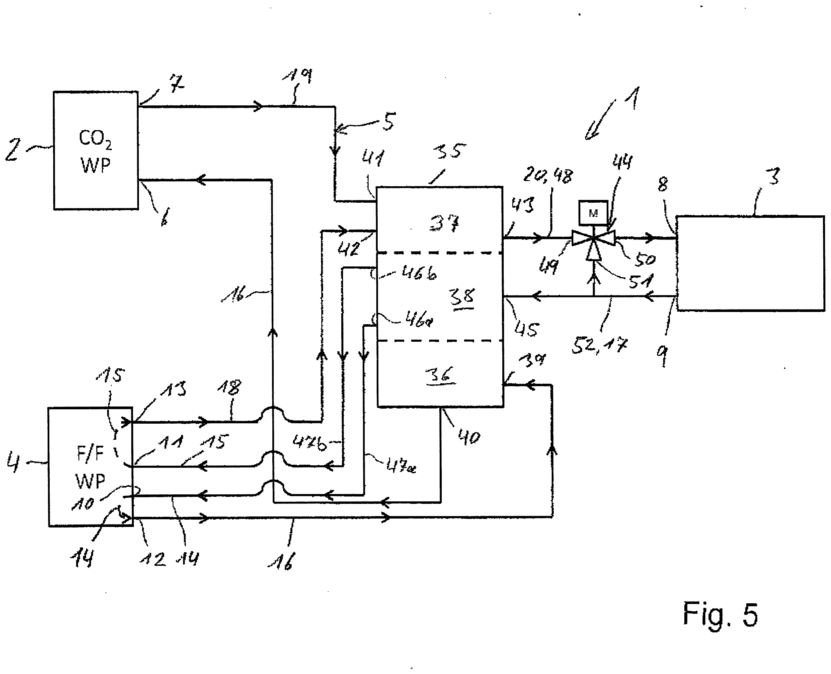

Es ist auch daran gedacht, dass der dritte Bereich 38 - wie in Figur 5 dargestellt - mindestens zwei Fluidaustritte 46a, 46b aufweist, beispielsweise einen ersten Fluidaustritt 46a, der unten im dritten Bereich 38 angeordnet ist und an den ersten Fluideintritt 10 der Fluid/Fluid-Wärmepumpe 4 angeschlossen ist, sodass der Fluidstrom 47a aus dem Fluidaustritt 46a zum Kaltfluidaustritt 12 geleitet wird, und einen zweiten Fluidaustritt 46b, der oben im dritten Bereich 38 angeordnet ist und an den zweiten Fluidaustritt 11 der Fluid/Fluid-Wärmepumpe 4 angeschlossen ist, sodass der Fluidstrom 47b aus dem Fluidaustritt 46b zum Warmfluidaustritt 13 geleitet wird.

Somit steht der Fluidaustritt 9 des Wärmetauschers 3 über den dritten Bereich 38 des Fluidspeichers 35 mit den Fluideintritten 10, 11 der Fluid/Fluid-Wärmepumpe 4 in Strömungsverbindung.

Wie bereits oben erwähnt, ist in dem Fluidstrom 48 vom zweiten Bereich 37 des Fluidspeichers 35 zum Fluideintritt 8 des Wärmetauschers 3 ein Drei-Wege-Ventil 44 angeordnet. Dieses Drei-Wege-Ventil 44 weist einen ersten und einen zweiten Eingang 49, 51 und einen Ausgang 50 auf. Der erste Eingang 49 ist an den Fluidaustritt 43 des zweiten Bereichs 37 des Fluidspeichers 35 angeschlossen. Der Ausgang 50 ist an den Fluideintritt 8 des Wärmetauschers 3 angeschlossen und in den zweiten Eingang 51 mündet eine Abzweigung von dem Fluidstrom 52, der vom Fluidausgang 9 des Wärmetauschers 3 zum Fluideintritt 45 des dritten Bereiches 38 des Fluidspeichers 35 strömt.

Das Drei-Wege-Ventil 44 ist in mindestens einem Betriebsmodus so schaltbar, dass der vom zweiten Bereich 37 des Fluidspeichers 35 kommende Fluidstrom 48 in den Eingang 49 des Drei-Wege-Ventils 44 eintritt und aus dessen ersten Ausgang 50 wieder austritt und zum Fluideintritt 8 des Wärmetauschers 3 strömt. In anderen Betriebsmodi kann das Drei-Wege-Ventil 44 so geschaltet werden, dass die in die beiden Eingänge 49, 51 eintretenden Fluidströme in jeweils vorgegebenen Verhältnissen miteinander gemischt werden.

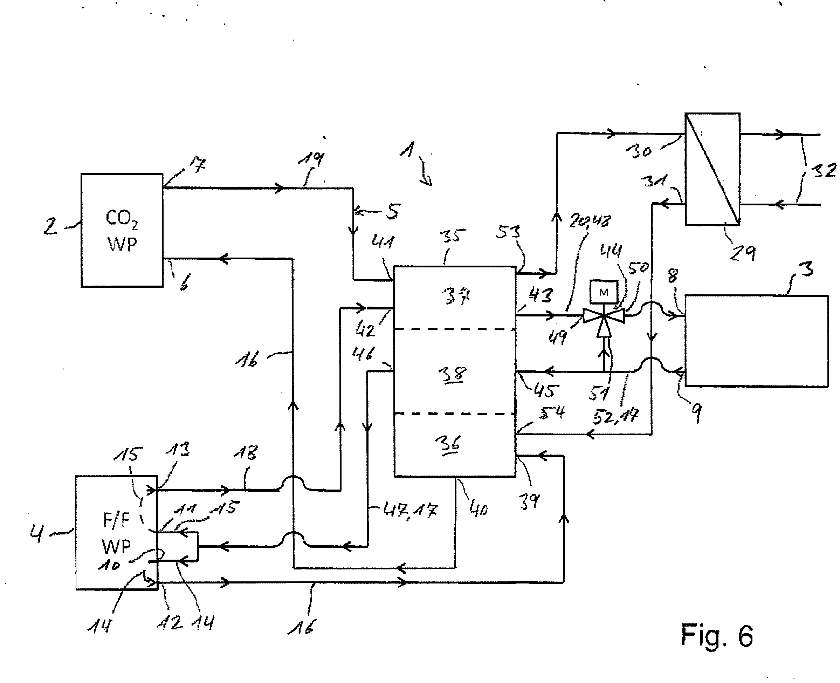

Das in Figur 6 dargestellte Ausführungsbeispiel entspricht dem Ausführungsbeispiel gemäß Figur 4 mit einem zweiten Wärmetauscher 29 gemäß dem Ausführungsbeispiel aus Figur 3.

Der zweite Bereich 37 des Fluidspeichers 35 weist hier einen zweiten Fluidaustritt 53 auf, der oben in dem zweiten Bereich 37 angeordnet ist. Dort ist die Temperatur des Fluids im Fluidspeicher 35 am höchsten und wird auch der vom Fluidaustritt 7 der CO₂-Wärmepumpe 2 kommende Fluidstrom 19 in den Fluidspeicher 35 eingeleitet. Der zweite Fluidaustritt 53 des zweiten Bereiches 37 ist an den Fluideintritt 30 des zweiten Wärmetauschers 29 angeschlossen, sodass dort Fluid mit der Temperatur eintritt, mit der es aus der CO₂-Wärmepumpe 2 austritt.

Der erste Bereich 36 des Fluidspeichers 35 weist einen zweiten Fluideintritt 54 auf, der an den Fluidaustritt 31 des zweiten Wärmetauschers 29 angeschlossen ist. In diesem Ausführungsbeispiel wird angenommen, dass zwischen Fluideintritt 30 und Fluidaustritt 31 des zweiten Wärmetauschers 29 eine große Temperaturdifferenz ΔT vorhanden ist, wie es zum Beispiel der Fall ist, wenn der zweite Wärmetauscher 29 zu einem Brauchwasserkreislauf 32 gehört. Entsprechend dieser großen Temperaturdifferenz ΔT ist der Fluideintritt 30 des zweiten Wärmetauschers 29 an den zweiten Bereich 37 des Fluidspeichers 35 und dort möglichst weit oben angeschlossen und der Fluidaustritt 31 des zweiten Wärmetauschers 29 an den ersten Bereich 36 angeschlossen, der kaltes Fluid enthält.

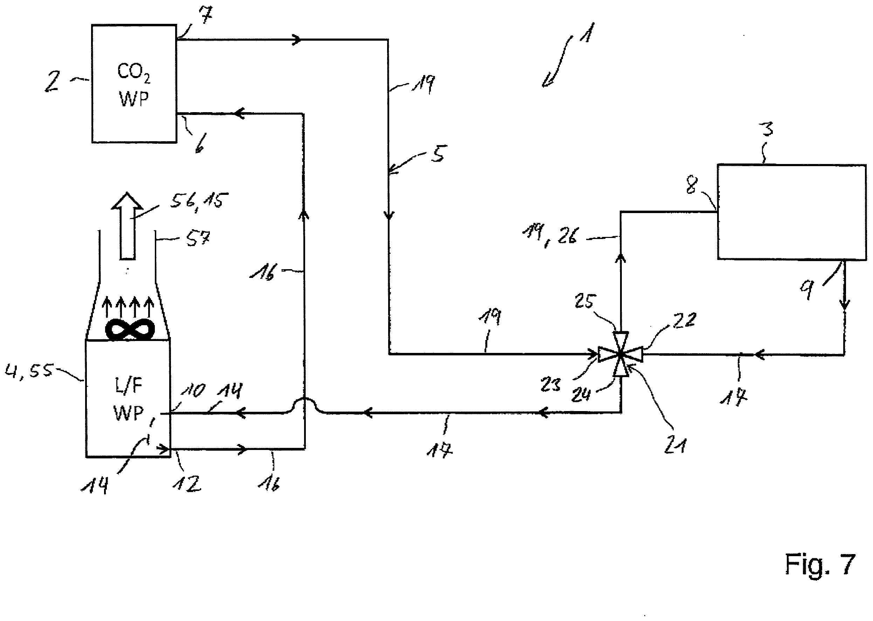

Die in Figur 7 dargestellte Anordnung entspricht der Anordnung aus Figur 2, wobei die Fluid/Fluid-Wärmepumpe 4 eine Luft/Fluid-Wärmepumpe 55 und insbesondere eine Luft/Wasser-Wärmepumpe ist. Der zweite Fluidstrom 15, dem die dem ersten Fluidstrom 14 entzogene Wärme zugeleitet wird, ist hier ein Luftstrom 56.

Falls die Anordnung zur Wärmeerzeugung bei einer Raum- und/oder Gebäudeheizung eingesetzt wird - der Wärmetauscher 3 also Teil einer Raum- und/oder Gebäudeheizungsanlage ist -, kann der Lufteintritt der Luft/Fluid-Wärmepumpe 55 mit der Außenluft bzw. der Umgebungsluft des Raumes oder des Gebäudes in Strömungsverbindung sein und der Luftaustritt 57 in den Raum bzw. in das Gebäude münden, um die Warmluft 56, 15 dort hineinzuleiten.

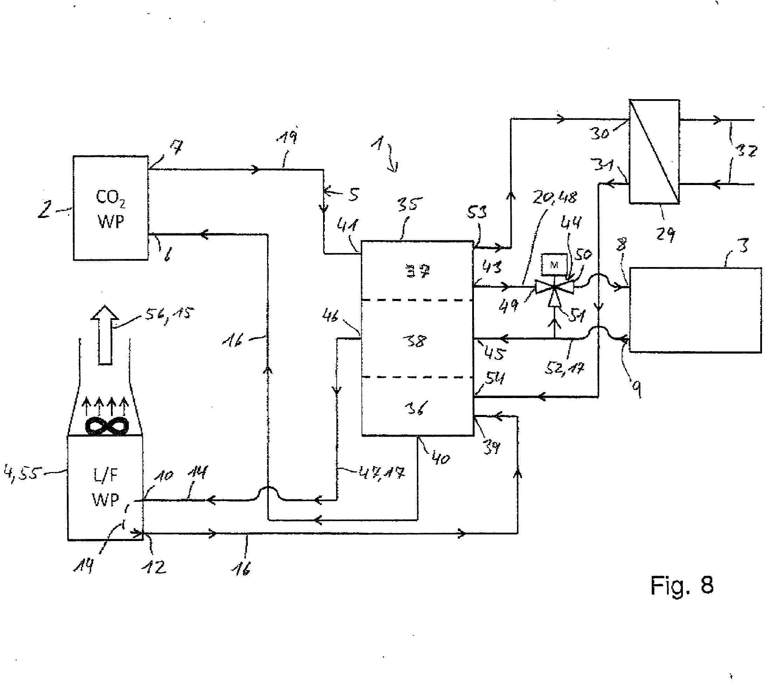

Das in Figur 8 dargestellte Ausführungsbeispiel entspricht dem Ausführungsbeispiel aus Figur 6 mit einer Luft/Fluid-Wärmepumpe 55 und insbesondere einer Luft/Wasser-Wärmepumpe, wie sie in Verbindung mit dem Ausführungsbeispiel aus Figur 7 beschrieben worden ist. Der gesamte vom Fluidspeicher 35 zur Luft/Fluid-Wärmepumpe 55 strömende Fluidstrom 47 wird als erster Fluidstrom 14 in der Luft/Fluid-Wärmepumpe 55 zum Kaltfluidaustritt 12 geleitet. Der zweite Fluidstrom 15 ist hier wie in dem Ausführungsbeispiel von Figur 7 ein Luftstrom 56. Die Führung des Luftstromes 56 kann hier ebenfalls so erfolgen, wie in Verbindung mit dem Ausführungsbeispiel von Figur 7 beschrieben.

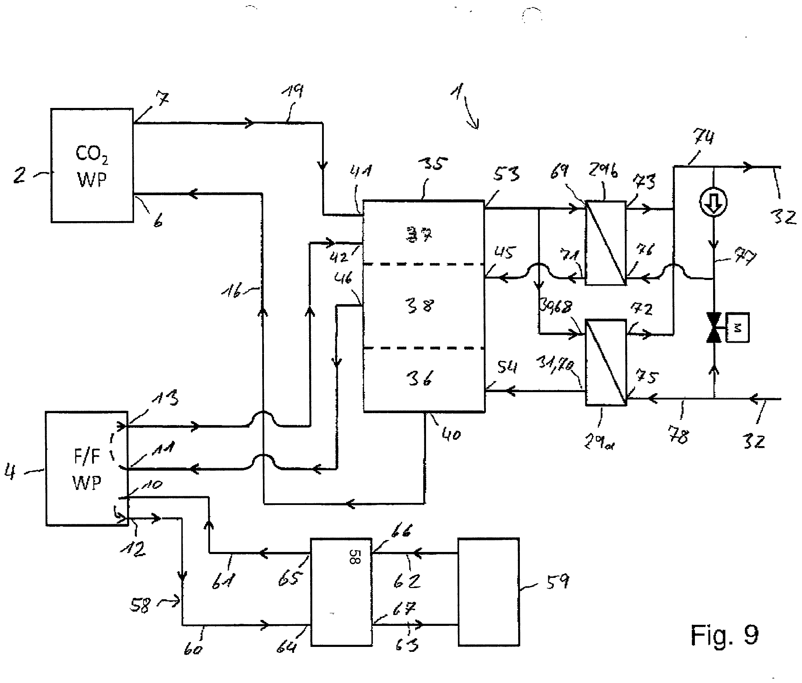

Das in Figur 9 dargestellte Ausführungsbeispiel ist eine mögliche Verschaltung für den Sommerbetrieb einer erfindungsgemäßen Anordnung, die im Winterbetrieb ein Gebäude beheizt und das Brauchwasser erwärmt und im Sommerbetrieb das Brauchwasser weiterhin erwärmt und einen Kühlkreislauf 58 versorgen kann.. Der Übersichtlichkeit halber ist der mindestens eine Wärmetauscher 3, der zur Heizungsanlage gehört und beispielsweise in Figur 8 dargestellt ist, in Figur 9 nicht dargestellt.

Bei dem Ausführungsbeispiel gemäß Figur 9 ist an den ersten Fluideintritt 10 und den Kaltfluidaustritt 12 der Fluid/Fluid-Wärmepumpe 4 ein Kühlkreislauf 58 mit einem Wärmetauscher 59 angeschlossen. Der aus dem Kaltfluidaustritt 12 austretende Fluidstrom 60 kann beispielsweise eine Temperatur im Bereich von 5° C bis 9° C oder von 16°C bis 20°C und der rücklaufende, in den ersten Fluideintritt 10 der Fluid/Fluid-Wärmepumpe 4 eintretende Fluidstrom 61 eine Temperatur im Bereich von 10° C bis 14° C oder von 21°C bis 25°C aufweisen.

In den Kühlkreislauf 58 kann auch optional ein zweiter Fluidspeicher 62 geschaltet sein, in den der von der Fluid/Fluid-Wärmepumpe 4 und der vom Wärmetauscher 59 kommende Fluidstrom 60, 62 münden und aus dem der zum Wärmetauscher 59 und der zur Fluid/Fluid-Wärmepumpe 4 strömende Fluidstrom 63, 61 austreten. Dabei sind für den Vorlauf 60, 63 ein erster Fluideintritt 64 und ein erster Fluidaustritt 67 am zweiten Fluidspeicher 62 unten angeordnet und für den Rücklauf 62, 61 ein zweiter Fluideintritt 66 und ein zweiter Fluidaustritt 65 am zweiten Fluidspeicher 62 oben angeordnet, da kaltes Fluid nach unten fällt und warmes Fluid nach oben steigt und daher die Fluidtemperatur unten niedriger ist als oben.

Die CO₂-Wärmepumpe 2, der zweite Fluideintritt 11 und der Warmfluidaustritt 13 der Fluid/Fluid-Wärmepumpe 4 sowie der (erste) Fluidspeicher 35 bilden zusammen mit zwei Wärmetauschern 29a, 29b, die Teil eines Brauchwasserkreislaufes 32 sind, einen Fluidkreislauf zur Erwärmung des Brauchwassers.

Der Fluidspeicher 35 entspricht einem Fluidspeicher, wie er in Verbindung mit den Ausführungsbeispielen aus den Figuren 4, 5, 6 und 8 beschrieben worden ist.

Der Fluidaustritt 7 der CO₂-Wärmepumpe 2 ist an einem ersten Fluideintritt 41 des zweiten Bereiches 37 des Fluidspeichers 35 angeschlossen. Der Fluideintritt 6 der CO₂-Wärmepumpe 2 ist an einen Fluidaustritt 40 des ersten Bereiches 36 des Fluidspeichers angeschlossen.

Der zweite Fluideintritt 11 der Fluid/Fluid-Wärmepumpe 4 ist an den Fluidaustritt 46 des dritten Bereiches 38 des Fluidspeichers 35 und der Warmfluidaustritt 13 der Fluid/Fluid-Wärmepumpe 4 an den zweiten Fluideintritt 42 des zweiten Bereiches 37 des Fluidspeichers 35 angeschlossen.

Die zwei Wärmetauscher 29a, 29b sind parallelgeschaltet, wobei der Fluidaustritt 53 des zweiten Bereiches 37 des Fluidspeichers 35 sowohl an den Fluideintritt 30, 68 des ersten Wärmetauschers 29a als auch an den Fluideintritt 69 des zweiten Wärmetauschers 29b angeschlossen ist. Der Fluidaustritt 71 auf der Fluidseite des zweiten Wärmetauschers 29b ist an den Fluideintritt 45 des dritten Bereichs 38 des Fluidspeichers 35 angeschlossen, wohingegen der Fluidaustritt 31, 70 auf der Fluidseite des ersten Wärmetauschers 29a an den Fluideintritt 54 des ersten Bereiches 36 des Fluidspeichers 35 angeschlossen ist.

Auf der Brauchwasserseite sind der Wasseraustritt 72 des ersten Wärmetauschers 29a und der Wasseraustritt 73 des zweiten Wärmetauschers 29b an denselben Wasservorlauf 74 des Brauchwasserkreislaufes 32 angeschlossen. Der Wassereintritt 76 des zweiten Wärmetauschers 29b ist an den Warm-Brauchwasserrücklauf 77 angeschlossen, wohingegen der Wassereintritt 75 des ersten Wärmetauschers 29a an den Kalt-Brauchwasserrücklauf 78 angeschlossen ist.

Auf diese Weise ist somit eine Erwärmung des Brauchwassers und gleichzeitig die Versorgung einer Klimaanlage mit gekühltem Fluid gewährleistet.

## Patentansprüche

1. Anordnung zur Wärmeerzeugung, mit
einer CO₂-Wärmepumpe (2), die einen Fluideintritt (6) und einen Fluidaustritt (7) aufweist und für die eine maximale Fluideintrittstemperatur vorgegeben ist,
einem Wärmetauscher (3), der einen Fluideintritt (8) und einen Fluidaustritt (9) aufweist und dessen Fluidaustrittstemperatur höher ist als die maximale Fluideintrittstemperatur der CO₂-Wärmepumpe (2), und mit
einer Fluid/Fluid-Wärmepumpe (4), die einen ersten und einen zweiten Fluideintritt (10, 11) sowie einen Kaltfluidaustritt (12) und einen Warmfluidaustritt (13) aufweist, wobei die Fluid/Fluid-Wärmepumpe (4) dazu eingerichtet ist, einen durch den ersten Fluideintritt (10) eintretenden ersten Fluidstrom (14) dem Kaltfluidaustritt (12) und einen durch den zweiten Fluideintritt (11) eintretenden zweiten Fluidstrom (15) dem Warmfluidaustritt (13) zuzuleiten und dabei dem ersten Fluidstrom (14) Wärme zu entziehen und zum zweiten Fluidstrom (15) weiterzuleiten,
wobei
die CO₂-Wärmepumpe (2), der Wärmetauscher (3) und die Fluid/Fluid-Wärmepumpe (4) in dieser Reihenfolge in einem Fluidkreislauf (5) hintereinanderschaltbar sind, der von einem Fluid durchströmt wird,
der Fluidaustritt (9) des Wärmetauschers (3) mit dem ersten Fluideintritt (10) der Fluid/Fluid-Wärmepumpe (4) in Strömungsverbindung steht,
die Fluid/Fluid-Wärmepumpe (4) dazu eingerichtet ist, den ersten Fluidstrom (14) auf eine Temperatur abzukühlen, die höchstens gleich der für die CO₂-Wärmepumpe (2) vorgegebenen maximalen Fluideintrittstemperatur ist, und
der Kaltfluidaustritt (12) der Fluid/Fluid-Wärmepumpe (4) mit dem Fluideintritt (6) der COz-Wärmepumpe (2) in Strömungsverbindung steht,
ferner mit einem Fluidspeicher (35), der einen ersten Bereich (36) zur Speicherung von Fluid mit einer ersten Temperatur, einen zweiten Bereich (37) zur Speicherung von Fluid mit einer zweiten Temperatur, die höher ist als die erste Temperatur, und einen dritten Bereich (38) zur Speicherung von Fluid aufweist, dessen Temperatur zwischen der ersten und der zweiten Temperatur liegt,
wobei
jeder der drei Bereiche mindestens einen Fluideintritt und mindestens einen Fluidaustritt aufweist und
ein Fluideintritt (41) des zweiten Bereichs (37) mit dem Fluidaustritt (7) der CO₂-Wärmepumpe (2) in Strömungsverbindung steht,
**dadurch gekennzeichnet, dass**
ein Fluideintritt (39) des ersten Bereichs (36) mit dem Kaltfluidaustritt (12) der Fluid/Fluid-Wärmepumpe (4) und ein Fluidaustritt (40) des ersten Bereichs (36) mit dem Fluideintritt (6) der CO₂-Wärmepumpe (2) in Strömungsverbindung steht,
und ein Fluidaustritt (43) des zweiten Bereichs (37) mit dem Fluideintritt (8) des Wärmetauschers (3) in Strömungsverbindung steht und
ein Fluideintritt (45) des dritten Bereichs (38) mit dem Fluidaustritt (9) des Wärmetauschers (3) und ein Fluidaustritt (46) des dritten Bereichs (38) mit dem ersten Fluideintritt (10) der Fluid/Fluid-Wärmepumpe (4) in Strömungsverbindung steht.

2. Anordnung nach Anspruch 1, **dadurch gekennzeichnet, dass** der Kreislauf-Fluidstrom sich zwischen Wärmetauscher (3) und Fluid/Fluid-Wärmepumpe (4) gabelt und ein erster Teilstrom als erster Fluidstrom (14) in den ersten Fluideintritt (10) und ein zweiter Teilstrom als zweiter Fluidstrom (15) in den zweiten Fluideintritt (11) eintritt und der zweite Fluidstrom (15) nach dem Austritt aus dem Warmfluidaustritt (13) in den Fluidstrom (19) von der COz-Wärmepumpe (2) zum Wärmetauscher (3) mündet.

3. Anordnung nach Anspruch 1, **dadurch gekennzeichnet, dass** der zweite Fluideintritt (11) und der Warmfluidaustritt (13) der Fluid/Fluid-Wärmepumpe (4) Teil eines zweiten Fluidkreislaufes (27) sind, der einen weiteren Wärmetauscher (28) aufweist.

4. Anordnung nach einem der vorhergehenden Ansprüche, **dadurch gekennzeichnet, dass** der zweite Bereich (37) des Fluidspeichers (35) einen zweiten Fluideintritt (42) aufweist und dieser mit dem Warmfluidaustritt (13) der Fluid/Fluid-Wärmepumpe (4) in Strömungsverbindung steht oder der zweite Fluidstrom (15) nach dem Austritt aus dem Warmfluidaustritt (13) der Fluid/Fluid-Wärmepumpe (4) in den Fluidstrom (19) von der CO₂-Wärmepumpe (2) zum Fluidspeicher (35) mündet.

5. Anordnung nach einem der vorhergehenden Ansprüche, **gekennzeichnet durch** einen zweiten Wärmetauscher (29) mit einem Fluideintritt (30) und einem Fluidaustritt (31), wobei der zweite Bereich (37) des Fluidspeichers (35) einen zweiten Fluidaustritt (53) aufweist, der mit dem Fluideintritt (30) des zweiten Wärmetauschers (29) in Strömungsverbindung steht, und der erste und/oder dritte Bereich (36, 38) des Fluidspeichers (35) einen zweiten Fluideintritt (54) aufweist, der mit dem Fluidaustritt (31) des zweiten Wärmetauschers (29) in Strömungsverbindung steht.

6. Anordnung nach einem der vorhergehenden Ansprüche, **dadurch gekennzeichnet, dass** der Fluidspeicher (35) ein Schichtspeicher mit hoher Stratifikation ist und mindestens drei Schichten aufweist, wobei die unterste Schicht dem ersten Bereich (36) und die oberste Schicht dem zweiten Bereich (37) und die mittlere Schicht dem dritten Bereich (38) entspricht.

7. Anordnung nach einem der vorhergehenden Ansprüche, **dadurch gekennzeichnet, dass** das im Fluidkreislauf (5) umlaufende Fluid Wasser ist.

8. Anordnung nach einem der vorhergehenden Ansprüche, **dadurch gekennzeichnet, dass** der erste Wärmetauscher (3) Teil einer Raum- oder Gebäudeheizung ist.

9. Anordnung nach Anspruch 5 und 8, **dadurch gekennzeichnet, dass** der zweite Wärmetauscher (29) Teil eines Brauchwasserkreislaufes (32) ist.

10. Anordnung nach einem der vorhergehenden Ansprüche, **dadurch gekennzeichnet, dass** die Temperaturdifferenz zwischen dem in die CO₂-Wärmepumpe (2) eintretenden Fluid und dem aus ihr austretenden Fluid mindestens 20° C beträgt und bevorzugt im Bereich von 40° C bis 85° C und besonders bevorzugt im Bereich von 45° C bis 70° C liegt.

11. Anordnung nach Anspruch 10, **dadurch gekennzeichnet, dass** die Temperatur des in die CO₂-Wärmepumpe (2) eintretenden Fluids höchstens 30° C beträgt und bevorzugt im Bereich von 2° C bis 25° C und besonders bevorzugt im Bereich von 5° C bis 20° C liegt.

12. Anordnung nach Anspruch 10 bis 11, **dadurch gekennzeichnet, dass** die Temperatur des aus der CO₂-Wärmepumpe (2) austretenden Fluids mindestens 50° C beträgt und bevorzugt im Bereich von 55° C bis 95° C und besonders bevorzugt im Bereich von 60° C bis 90° C liegt.

13. Anordnung nach einem der Ansprüche 1, 3, 5, 6, 8 bis 12, jeweils nicht in Verbindung mit Anspruch 2, **dadurch gekennzeichnet, dass** das im Fluidkreislauf (5) umlaufende Fluid Wasser ist.und die Fluid/Fluid-Wärmepumpe (4) eine Luft/Wasser-Wärmepumpe ist, wobei der zweite Fluidstrom (15) ein Luftstrom (56) ist.

14. Anordnung nach den Ansprüchen 13 und 8, **dadurch gekennzeichnet, dass** der zweite Fluideintritt (11) der Luft/Wasser-Wärmepumpe mit der Umgebungsluft des Raumes bzw. des Gebäudes in Strömungsverbindung steht und der Warmfluidaustritt (13, 57) der Luft/Wasser-Wärmepumpe in den Raum bzw. das Gebäude mündet.

15. Anordnung nach einem der Ansprüche 1 bis 4, 6 bis 12, jeweils in Verbindung mit Anspruch 5, **dadurch gekennzeichnet, dass**
der Kaltfluidaustritt (12) der Fluid/Fluid-Wärmepumpe (4) an den Vorlauf (60, 63) eines Kühlkreislaufes (58) und der erste Fluideintritt (10) der Fluid/Fluid-Wärmepumpe (4) an den Rücklauf (62, 61) des Kühlkreislaufes (58) anschließbar sind und
der Fluideintritt (6) der CO₂-Wärmepumpe (2) an den Fluidaustritt (40) des ersten Bereichs (36) des Fluidspeichers (35) anschließbar ist und
der erste Bereich (36) des Fluidspeichers (35) einen zweiten Fluideintritt (54) aufweist, der mit dem Fluidaustritt (31, 70) des zweiten Wärmetauschers (29, 29a) in Strömungsverbindung steht.

## Claims

1. An assembly for heat generation, comprising
a CO₂ heat pump (2) which includes a fluid inlet (6) and a fluid outlet (7) and for which a maximum fluid inlet temperature is specified,
a heat exchanger (3) which includes a fluid inlet (8) and a fluid outlet (9) and whose fluid outlet temperature is higher than the maximum fluid inlet temperature of the CO₂ heat pump (2), and comprising
a fluid/fluid heat pump (4) which includes a first and a second fluid inlet (10, 11) and a cold fluid outlet (12) and a warm fluid outlet (13), wherein the fluid/fluid heat pump (4) is adapted to supply a first fluid stream (14) entering through the first fluid inlet (10) to the cold fluid outlet (12) and to supply a second fluid stream (15) entering through the second fluid inlet (11) to the warm fluid outlet (13) and thereby withdraw heat from the first fluid stream (14) and pass the same on to the second fluid stream (15),
wherein
the CO₂ heat pump (2), the heat exchanger (3) and the fluid/fluid heat pump (4) can be connected in series in this order in a fluid circuit (5), wherein a fluid flows through the fluid circuit,
the fluid outlet (9) of the heat exchanger (3) is in flow connection with the first fluid inlet (10) of the fluid/fluid heat pump (4),
the fluid/fluid heat pump (4) is adapted to cool the first fluid stream (14) to a temperature which at most is equal to the maximum fluid inlet temperature specified for the CO₂ heat pump (2), and
the cold fluid outlet (12) of the fluid/fluid heat pump (4) is in flow connection with the fluid inlet (6) of the CO₂ heat pump (2),
furthermore comprising a fluid reservoir (35) which includes a first region (36) for storing fluid with a first temperature, a second region (37) for storing fluid with a second temperature, which is higher than the first temperature, and a third region (38) for storing fluid whose temperature lies between the first and the second temperature,
wherein
each of the three regions includes at least one fluid inlet and at least one fluid outlet, and
a fluid inlet (41) of the second region (37) is in flow connection with the fluid outlet (7) of the CO₂ heat pump (2),
**characterized in that**
a fluid inlet (39) of the first region (36) is in flow connection with the cold fluid outlet (12) of the fluid/fluid heat pump (4) and a fluid outlet (40) of the first region (36) is in flow connection with the fluid inlet (6) of the CO₂ heat pump (2),
and a fluid outlet (43) of the second region (37) is in flow connection with the fluid inlet (8) of the heat exchanger (3), and
a fluid inlet (45) of the third region (38) is in flow connection with the fluid outlet (9) of the heat exchanger (3) and a fluid outlet (46) of the third region (38) is in flow connection with the first fluid inlet (10) of the fluid/fluid heat pump (4).

2. The assembly according to claim 1, **characterized in that** the circuit fluid stream is split between heat exchanger (3) and fluid/fluid heat pump (4) and a first partial stream enters the first fluid inlet (10) as a first fluid stream (14) and a second partial stream enters the second fluid inlet (11) as a second fluid stream (15), and after exit from the warm fluid outlet (13) the second fluid stream (15) flows into the fluid stream (19) from the CO₂ heat pump (2) to the heat exchanger (3).

3. The assembly according to claim 1, **characterized in that** the second fluid inlet (11) and the warm fluid outlet (13) of the fluid/fluid heat pump (4) form part of a second fluid circuit (27) which includes a further heat exchanger (28).

4. The assembly according to any of the preceding claims, **characterized in that** the second region (37) of the fluid reservoir (35) includes a second fluid inlet (42) and the same is in flow connection with the warm fluid outlet (13) of the fluid/fluid heat pump (4) or after exit from the warm fluid outlet (13) of the fluid/fluid heat pump (4) the second fluid stream (15) flows into the fluid stream (19) from the CO₂ heat pump (2) to the fluid reservoir (35).

5. The assembly according to any of the preceding claims, **characterized by** a second heat exchanger (29) with a fluid inlet (30) and a fluid outlet (31), wherein the second region (37) of the fluid reservoir (35) includes a second fluid outlet (53) which is in flow connection with the fluid inlet (30) of the second heat exchanger (29), and the first and/or third region (36, 38) of the fluid reservoir (35) includes a second fluid inlet (54) which is in flow connection with the fluid outlet (31) of the second heat exchanger (29).

6. The assembly according to any of the preceding claims, **characterized in that** the fluid reservoir (35) is a stratified reservoir with high stratification and includes at least three layers, wherein the bottommost layer corresponds to the first region (36) and the uppermost layer corresponds to the second region (37) and the middle layer corresponds to the third region (38).

7. The assembly according to any of the preceding claims, **characterized in that** the fluid circulating in the fluid circuit (5) is water.

8. The assembly according to any of the preceding claims, **characterized in that** the first heat exchanger (3) forms part of a room or building heater.

9. The assembly according to claim 5 and 8, **characterized in that** the second heat exchanger (29) forms part of a service water circuit (32).

10. The assembly according to any of the preceding claims, **characterized in that** the temperature difference between the fluid entering the CO₂ heat pump (2) and the fluid exiting from the same is at least 20 °C and preferably lies in the range of 40 °C to 85 °C and particularly preferably in the range of 45 °C to 70 °C.

11. The assembly according to claim 10, **characterized in that** the temperature of the fluid entering the CO₂ heat pump (2) is not more than 30 °C and preferably lies in the range of 2 °C to 25 °C and particularly preferably in the range of 5 °C to 20 °C.

12. The assembly according to claims 10 to 11, **characterized in that** the temperature of the fluid exiting from the CO₂ heat pump (2) is at least 50 °C and preferably lies in the range of 55 °C to 95 °C and particularly preferably in the range of 60 °C to 90 °C.

13. The assembly according to any of claims 1, 3, 5, 6, 8 to 12, each not in conjunction with claim 2, **characterized in that** the fluid circulating in the fluid circuit (5) is water and the fluid/fluid heat pump (4) is an air/water heat pump, wherein the second fluid stream (15) is an air stream (56).

14. The assembly according to claims 13 and 8, **characterized in that** the second fluid inlet (11) of the air/water heat pump is in flow connection with the ambient air of the room or the building and the warm fluid outlet (13, 57) of the air/water heat pump opens into the room or the building.

15. The assembly according to any of claims 1 to 4, 6 to 12, each in conjunction with claim 5, **characterized in that**
the cold fluid outlet (12) of the fluid/fluid heat pump (4) can be connected to the feed line (60, 63) of a cooling circuit (58) and the first fluid inlet (10) of the fluid/fluid heat pump (4) can be connected to the return line (62, 61) of the cooling circuit (58), and
the fluid inlet (6) of the CO₂ heat pump (2) can be connected to the fluid outlet (40) of the first region (36) of the fluid reservoir (35), and
the first region (36) of the fluid reservoir (35) includes a second fluid inlet (54) which is in flow connection with the fluid outlet (31, 70) of the second heat exchanger (29, 29a).

## Revendications

1. Dispositif de production de chaleur, comprenant
une pompe à chaleur CO₂ (2) qui présente une entrée de fluide (6) et une sortie de fluide (7) et pour laquelle une température maximale d'entrée de fluide est prédéfinie,
un échangeur de chaleur (3) qui présente une entrée de fluide (8) et une sortie de fluide (9) et dont la température de sortie de fluide est supérieure à la température maximale d'entrée de fluide de la pompe à chaleur CO₂ (2), et comprenant
une pompe à chaleur fluide/fluide (4) qui présente une première et une deuxième entrée de fluide (10, 11) ainsi qu'une sortie de fluide froid (12) et une sortie de fluide chaud (13), la pompe à chaleur fluide/fluide (4) étant conçue pour amener un premier flux de fluide (14), entrant par la première entrée de fluide (10), à la sortie de fluide froid (12) et pour amener un deuxième flux de fluide (15), entrant par la deuxième entrée de fluide (11), à la sortie de fluide chaud (13) et pour extraire ainsi de la chaleur du premier flux de fluide (14) et pour la transmettre au deuxième flux de fluide (15),
dans lequel
la pompe à chaleur CO₂ (2), l'échangeur de chaleur (3) et la pompe à chaleur fluide/fluide (4) peuvent être montés en série dans cet ordre dans un circuit de fluide (5) qui est traversé par un fluide,
la sortie de fluide (9) de l'échangeur de chaleur (3) est en communication fluidique avec la première entrée de fluide (10) de la pompe à chaleur fluide/fluide (4),
la pompe à chaleur fluide/fluide (4) est conçue pour refroidir le premier flux de fluide (14) à une température qui est au maximum égale à la température maximale d'entrée de fluide prédéfinie pour la pompe à chaleur CO₂ (2), et
la sortie de fluide froid (12) de la pompe à chaleur fluide/fluide (4) est en communication fluidique avec l'entrée de fluide (6) de la pompe à chaleur CO₂ (2), comprenant en outre un réservoir de fluide (35) qui présente une première zone (36) de stockage de fluide à une première température, une deuxième zone (37) de stockage de fluide à une deuxième température supérieure à la première température, et une troisième zone (38) de stockage de fluide dont la température est comprise entre la première et la deuxième température,
chacune des trois zones présentant au moins une entrée de fluide et au moins une sortie de fluide, et
une entrée de fluide (41) de la deuxième zone (37) est en communication fluidique avec la sortie de fluide (7) de la pompe à chaleur CO₂ (2),
**caractérisé en ce que**
une entrée de fluide (39) de la première zone (36) est en communication fluidique avec la sortie de fluide froid (12) de la pompe à chaleur fluide/fluide (4), et une sortie de fluide (40) de la première zone (36) est en communication fluidique avec l'entrée de fluide (6) de la pompe à chaleur CO₂ (2),
et une sortie de fluide (43) de la deuxième zone (37) est en communication fluidique avec l'entrée de fluide (8) de l'échangeur de chaleur (3), et
une entrée de fluide (45) de la troisième zone (38) est en communication fluidique avec la sortie de fluide (9) de l'échangeur de chaleur (3), et une sortie de fluide (46) de la troisième zone (38) est en communication fluidique avec la première entrée de fluide (10) de la pompe à chaleur fluide/fluide (4).

2. Dispositif selon la revendication 1,
**caractérisé en ce que** le flux de fluide du circuit bifurque entre l'échangeur de chaleur (3) et la pompe à chaleur fluide/fluide (4), et un premier flux partiel entre en tant que premier flux de fluide (14) dans la première entrée de fluide (10) et un deuxième flux partiel entre en tant que deuxième flux de fluide (15) dans la deuxième entrée de fluide (11), et le deuxième flux de fluide (15), une fois sorti de la sortie de fluide chaud (13), débouche dans le flux de fluide (19) allant de la pompe à chaleur CO₂ (2) vers l'échangeur de chaleur (3).

3. Dispositif selon la revendication 1,
**caractérisé en ce que** la deuxième entrée de fluide (11) et la sortie de fluide chaud (13) de la pompe à chaleur fluide/fluide (4) font partie d'un deuxième circuit de fluide (27) comprenant un autre échangeur de chaleur (28).

4. Dispositif selon l'une des revendications précédentes,
**caractérisé en ce que** la deuxième zone (37) du réservoir de fluide (35) présente une deuxième entrée de fluide (42), et celle-ci est en communication fluidique avec la sortie de fluide chaud (13) de la pompe à chaleur fluide/fluide (4), ou le deuxième flux de fluide (15), une fois sorti de la sortie de fluide chaud (13) de la pompe à chaleur fluide/fluide (4), débouche dans le flux de fluide (19) allant de la pompe à chaleur CO₂ (2) vers le réservoir de fluide (35).

5. Dispositif selon l'une des revendications précédentes,
**caractérisé par** un deuxième échangeur de chaleur (29) présentant une entrée de fluide (30) et une sortie de fluide (31), la deuxième zone (37) du réservoir de fluide (35) présentant une deuxième sortie de fluide (53) qui est en communication fluidique avec l'entrée de fluide (30) du deuxième échangeur de chaleur (29), et la première et/ou la troisième zone (36, 38) du réservoir de fluide (35) présente une deuxième entrée de fluide (54) qui est en communication fluidique avec la sortie de fluide (31) du deuxième échangeur de chaleur (29).

6. Dispositif selon l'une des revendications précédentes,
**caractérisé en ce que** le réservoir de fluide (35) est un réservoir stratifié à haute stratification et présente au moins trois couches, la couche la plus basse correspondant à la première zone (36) et la couche la plus haute correspondant à la deuxième zone (37) et la couche intermédiaire correspondant à la troisième zone (38).

7. Dispositif selon l'une des revendications précédentes,
**caractérisé en ce que** le fluide circulant dans le circuit de fluide (5) est de l'eau.

8. Dispositif selon l'une des revendications précédentes,
**caractérisé en ce que** le premier échangeur de chaleur (3) fait partie d'un système de chauffage de locaux ou de bâtiments.

9. Dispositif selon les revendications 5 et 8,
**caractérisé en ce que** le deuxième échangeur de chaleur (29) fait partie d'un circuit d'eau sanitaire (32).

10. Dispositif selon l'une des revendications précédentes,
**caractérisé en ce que** la différence de température entre le fluide entrant dans la pompe à chaleur CO₂ (2) et le fluide sortant de celle-ci est de 20 °C au minimum et se situe de préférence dans la plage de 40 °C à 85 °C et de manière particulièrement préférée dans la plage de 45 °C à 70 °C.

11. Dispositif selon la revendication 10,
**caractérisé en ce que** la température du fluide entrant dans la pompe à chaleur CO₂ (2) est de 30 °C au maximum et se situe de préférence dans la plage de 2 °C à 25 °C et de manière particulièrement préférée dans la plage de 5 °C à 20 °C.

12. Dispositif selon les revendications 10 à 11,
**caractérisé en ce que** la température du fluide sortant de la pompe à chaleur CO₂ (2) est de 50 °C au minimum et se situe de préférence dans la plage de 55 °C à 95 °C et de manière particulièrement préférée dans la plage de 60 °C à 90 °C.

13. Dispositif selon l'une des revendications 1, 3, 5, 6, 8 à 12, respectivement non en combinaison avec la revendication 2,
**caractérisé en ce que** le fluide circulant dans le circuit de fluide (5) est de l'eau, et la pompe à chaleur fluide/fluide (4) est une pompe à chaleur air/eau, le deuxième flux de fluide (15) étant un flux d'air (56).

14. Dispositif selon les revendications 13 et 8,
**caractérisé en ce que** la deuxième entrée de fluide (11) de la pompe à chaleur air/eau est en communication fluidique avec l'air ambiant du local ou du bâtiment, et la sortie de fluide chaud (13, 57) de la pompe à chaleur air/eau débouche dans le local ou le bâtiment.

15. Dispositif selon l'une des revendications 1 à 4, 6 à 12, respectivement en combinaison avec la revendication 5,
**caractérisé en ce que**
la sortie de fluide froid (12) de la pompe à chaleur fluide/fluide (4) peut être raccordée à l'aller (60, 63) d'un circuit de refroidissement (58), et la première entrée de fluide (10) de la pompe à chaleur fluide/fluide (4) peut être raccordée au retour (62, 61) du circuit de refroidissement (58), et
l'entrée de fluide (6) de la pompe à chaleur CO₂ (2) peut être raccordée à la sortie de fluide (40) de la première zone (36) du réservoir de fluide (35), et
la première zone (36) du réservoir de fluide (35) présente une deuxième entrée de fluide (54) qui est en communication fluidique avec la sortie de fluide (31, 70) du deuxième échangeur de chaleur (29, 29a).
